(19) Europäisches Patentamt
European Patent Office
Office européen des brevets

(11) **EP 2 408 569 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**29.09.2021 Patentblatt 2021/39**

(45) Hinweis auf die Patenterteilung:
**06.05.2015 Patentblatt 2015/19**

(21) Anmeldenummer: **10706551.8**

(22) Anmeldetag: **02.03.2010**

(51) Int Cl.:
***B05B 5/10*** *(2006.01)*     ***H02H 7/00*** *(2006.01)*
***B05B 13/04*** *(2006.01)*     ***B05B 5/04*** *(2006.01)*

(86) Internationale Anmeldenummer:
**PCT/EP2010/001286**

(87) Internationale Veröffentlichungsnummer:
**WO 2010/105738 (23.09.2010 Gazette 2010/38)**

(54) **ÜBERWACHUNGSVERFAHREN UND ÜBERWACHUNGSEINRICHTUNG FÜR EINE ELEKTROSTATISCHE BESCHICHTUNGSANLAGE**

MONITORING METHOD AND MONITORING DEVICE FOR AN ELECTROSTATIC COATING PLANT

PROCÉDÉ DE SURVEILLANCE ET DISPOSITIF DE SURVEILLANCE POUR UNE INSTALLATION DE REVÊTEMENT ÉLECTROSTATIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.03.2009 DE 102009013561**

(43) Veröffentlichungstag der Anmeldung:
**25.01.2012 Patentblatt 2012/04**

(73) Patentinhaber: **Dürr Systems AG**
**74321 Bietigheim-Bissingen (DE)**

(72) Erfinder: **GEIGER, Andreas**
**72172 Sulz-Bergfelden (DE)**

(74) Vertreter: **Beier, Ralph**
**V. Bezold & Partner**
**Patentanwälte - PartG mbB**
**Akademiestraße 7**
**80799 München (DE)**

(56) Entgegenhaltungen:
**EP-A2- 0 185 311**     **EP-A2- 1 250 962**
**DE-A1- 2 734 341**     **DE-A1- 3 709 510**
**DE-A1- 10 003 295**     **DE-A1-102006 056 879**
**DE-T2- 69 620 508**     **DE-U1- 29 910 321**
**US-A1- 2005 040 262**

EP 2 408 569 B2

## Beschreibung

Die Erfindung betrifft ein Überwachungsverfahren und eine entsprechende Überwachungseinrichtung für eine elektrostatische Beschichtungsanlage, die Bauteile mit einem Beschichtungsmittel beschichtet, das mittels einer Hochspannungseinrichtung elektrisch aufgeladen wird.

Derartige elektrostatische Beschichtungsanlagen müssen gemäß den einschlägigen technischen Normen (z.B. EN 50176, EN 50348) Überwachungseinrichtungen aufweisen, die ein unzulässiges Ansteigen des elektrischen Betriebsstromes verhindern. Diese Überwachungseinrichtungen überprüfen laufend den Ist-Wert einer elektrischen Betriebsgröße (z.B. Betriebsstrom) der Hochspannungseinrichtung mit einem maximal bzw. minimal zulässigen Grenzwert.

Bei einem spannungsgeregelten Betrieb der elektrostatischen Beschichtungsanlage wird in der Regel der Betriebsstrom mit einem maximal zulässigen Grenzwert verglichen.

Bei einem alternativ möglichen stromgeregelten Betrieb der elektrostatischen Beschichtungsanlage wird dagegen in der Regel die Betriebsspannung mit einem minimal zulässigen Grenzwert für die Spannung verglichen.

Falls die gemessene elektrische Betriebsgröße den vorgegebenen Grenzwert in Abhängigkeit von der Betriebsart (stromgeregelt oder spannungsgeregelt) über- bzw. unterschreitet, erfolgt als Sicherheitsmaßnahme eine sofortige Abschaltung der Hochspannungsversorgung.

Das vorstehend beschriebene herkömmliche Überwachungsverfahren für eine elektrostatische Beschichtungsanlage arbeitet zufriedenstellend bei der Verarbeitung hochohmiger Lacke (> 400 kΩ gemäß Ransburg-Skala). Bei der Lackierung von Kraftfahrzeugkarosseriebauteilen werden jedoch zunehmend niederohmige Lacke (< 300 kΩ gemäß Ransburg-Skala) verwendet, die oftmals einen hohen Festkörperanteil enthalten, was ein gewisses Sicherheitsrisiko birgt, da die Grenzwerte für die Sicherheitsschwellen zunehmend höher eingestellt werden müssen, weil das Verhältnis zwischen dem über das zu beschichtende Bauteil fließenden Lackierstrom einerseits und dem über die sonstige Lackieranlage abfließenden Anlagenstrom andererseits aufgrund des geringen Widerstandes des verwendeten Lacks immer ungünstiger wird.

Verschärft wird diese Problematik noch durch Schwankungen im elektrischen Widerstand des Lacks zwischen unterschiedlichen Chargen oder verschiedenen Herstellerserien. So betrug das Verhältnis zwischen Lackierstrom und Anlagenstrom bisher beispielsweise 10:1, wohingegen das Verhältnis von Lackierstrom zu Anlagenstrom bei niederohmigen Lacken bei 1:2 liegen kann. Es gibt sogar Anlagen, bei denen der Lackierstrom 2 μA und der Anlagenstrom 50μA beträgt. So sind beispielsweise Lacke mit einem hohen Festkörperanteil niederohmig. Darüber hinaus machen Lösemittel und Additive den Lack mehr oder wenig leitfähig. Ferner können Effektpartikel (z.B. Metallic-Flakes) eine leitfähige Strecke bilden, wenn der Lack zirkuliert. Dadurch wirken sich Schwankungen des Anlagenstroms wesentlich stärker aus.

Hinzu kommt noch, dass sowohl der Lackierstrom als auch der Anlagenstrom von der Lackierspannung abhängig sind. Dies macht sich insbesondere bei einem großen Anlagenstrom nachteilig bemerkbar, denn wenn beispielsweise mit mehreren unterschiedlichen Spannungen lackiert wird, muss der Grenzwert für die Überwachung auf die höchste verwendete Spannung eingestellt werden. Dies führt dazu, dass der Störabstand zwischen dem normalen Betriebsstrom und dem Grenzwert für die Sicherheitsabschaltung immer höher wird, je niedriger die Lackierspannungen sind.

Aus DE 199 03 824 A1 ist ein Überwachungsverfahren bekannt, bei dem der Grenzwert jedoch nicht in Abhängigkeit von elektrischen Betriebsgrößen angepasst wird.

Ferner ist aus DD 31812 A eine Strombegrenzungsschaltung bekannt, bei der der Grenzwert jedoch für jede Lackart, jede Lackierteilform und jeden Benetzungsgrad individuell eingestellt werden muss. Eine automatische Anpassung des Grenzwerts ist also aus dieser Druckschrift nicht bekannt.

Dies gilt auch für US 2008/0203198 A1, bei der der Grenzwert ebenfalls in Abhängigkeit von dem zu beschichtenden Bauteil eingestellt werden muss.

Auch aus US 2007/0227445 A1 ist nicht bekannt, den Grenzwert automatisch einzustellen und zwar in Abhängigkeit von elektrischen Betriebsgrößen der Beschichtungsanlage.

Schließlich offenbart US 4 073 002 überhaupt keine Grenzwertanpassung. Vielmehr sieht diese Druckschrift lediglich einen Strombegrenzungswiderstand vor, der automatisch zu einer Stabilisierung führt.

Aus EP 1 250 962 A2 ist ein Verfahren zur Betriebssteuerung einer elektrostatischen Beschichtungsanlage bekannt, bei dem während eines Beschichtungsvorgangs Grenzwerte sowohl für die Spannung als auch für den Strom durch den Hochspannungserzeuger steuernde Datensignale eines Steuersystems vorgegeben werden und bei Erreichen des Grenzwerts dessen Überschreiten durch selbsttätiges Herabsetzen des jeweils anderen Parameters, also des Stroms bzw. der Spannung während der weiteren Beschichtung verhindert wird. Dadurch kann stets das bestmögliche Produkt aus diesen Parametern für optimale Aufladung des Beschichtungsmaterials eingestellt werden. Hierbei kann durch externe Steuersignale der Grenzwert mindestens eines der beiden Parameter zur Anpassung des Lackierbetriebs an unterschiedliche Betriebsbedingungen geändert werden.

Aus EP 0 185 311 A2 ist es zur Betriebsüberwachung einer elektrostatischen Beschichtungsanlage bekannt, vor Beginn des Beschichtungsbetriebs unter Normalbedingungen den Betriebsstrom in Abhängigkeit von der Hochspannung zu messen und die Messwerte als Kurve in einem Steuerrechner zu speichern. Der Steuerrechner speichert ferner aufgrund dieser Strom-Normalwerte errechnete entsprechende Stromgrenzwerte in Abhängigkeit von der Hochspannung. Der Betriebsstrom wird auch während des Beschichtungsbetriebs gemessen und jeweils mit dem entsprechend der eingestellten Hochspannung selbsttätig ausgewählten gespeicherten Strom-Normalwert verglichen. Bei Überschreiten des jeweiligen vor Betriebsbeginn errechneten Schwellwerts wird die Hochspannung abgeschaltet, um bei unzulässiger Verringerung des Abstands zwischen dem Beschichtungsgerät und dem zu beschichtenden Werkstück die Gefahr eines Spannungsdurchbruchs oder einer Funkenentladung zu verhindern.

Der Erfindung liegt die Aufgabe zugrund, ein verbessertes Überwachungsverfahren und eine verbesserte Überwachungseinrichtung für eine elektrostatische Beschichtungsanlage zu schaffen.

Insbesondere ist es wünschenswert, die vorstehend beschriebenen Probleme des Standes der Technik zu vermeiden.

Diese Aufgabe wird durch ein erfindungsgemäßes Überwachungsverfahren und eine erfindungsgemäße Überwachungseinrichtung gemäß den nebengeordneten Ansprüchen gelöst.

Die Erfindung umfasst die allgemeine technische Lehre, den Grenzwert für die Überprüfung der sicherheitsrelevanten elektrischen Betriebsgröße (d.h. Betriebsstrom) der elektrostatischen Beschichtungsanlage nicht starr vorzugeben, sondern betriebsabhängig flexibel in Abhängigkeit von dem Wert einer im Betrieb der Beschichtungsanlage laufend gemessenen Betriebsgröße einzustellen, um einen möglichst geringen Störabstand zu gewährleisten. Damit kann die Überwachungsfunktion feiner an die jeweiligen Betriebsbedingungen angepasst werden, wodurch eine schnellere Reaktion im Fehlerfall und damit auch eine verbesserte Sicherheit gegeben ist.

Der im Rahmen der Erfindung verwendete Begriff eines Störabstands stellt vorzugsweise auf den Abstand zwischen dem aktuellen Wert der überwachten elektrischen Betriebsgröße (d.h. Betriebsstrom) und dem Grenzwert ab.

In einer Variante der Erfindung ist die überwachte sicherheitsrelevante Betriebsgröße also identisch mit der geregelten Betriebsgröße. Erfindungsgemäß bildet der Betriebsstrom der elektrostatischen Beschichtungsanlage die sicherheitsrelevante Betriebsgröße, wobei auch eine Regelung des Betriebsstroms erfolgt.

In einer anderen Variante der Erfindung ist die überwachte sicherheitsrelevante Betriebsgröße dagegen nicht identisch mit der geregelten Betriebsgröße der elektrostatischen Beschichtungsanlage. In dieser Variante der Erfindung wird also nicht die geregelte Betriebsgröße der elektrostatischen Beschichtungsanlage überwacht, sondern eine andere Betriebsgröße. Beispielsweise kann die Betriebsspannung der elektrostatischen Beschichtungsanlage geregelt werden, während der Betriebsstrom als sicherheitsrelevante Betriebsgröße überwacht wird.

In einem bevorzugten Ausführungsbeispiel der Erfindung wird die Einstellung des Grenzwertes für die Sicherheitsüberwachung jedoch komplett automatisiert, wodurch nicht nur der Aufwand reduziert, sondern zugleich die Sicherheit erhöht wird, weil Grenzwerte, die absichtlich oder unbeabsichtigt zu hoch eingestellt werden, nicht mehr auftreten können.

Bei diesem Ausführungsbeispiel ist zu erwähnen, dass der zur Aufladung des Beschichtungsmittels dienende Betriebsstrom in der Regel aus einem sogenannten Anlagenstrom und einem sogenannten Lackierstrom besteht, wobei der Anlagenstrom über die Beschichtungsanlage und nicht über das zu beschichtende Bauteil abfließt, während der Lackierstrom über das zu beschichtende Bauteil abfließt und nicht über die Beschichtungsanlage.

Der Anlagenstrom ist im Wesentlichen abhängig von der Ausgangsspannung der Hochspannungsversorgung und dem elektrischen Widerstand des verwendeten Beschichtungsmittels und ggf. des Spülmittels. Bei konstanter Ausgangsspannung ist der Anlagenstrom während des Beschichtüngsvorganges konstant. Ferner kann der Anlagenstrom auch abhängen vom Querschnitt der Leitungen, der Leitungstänge und der Anzahl der Leitungen inklusive der Rückführungen.

Der Lackierstrom ist dagegen eine variable Betriebsgröße, die sich in Abhängigkeit diverser Parameter (z.B. Abstand Applikator-Werkstück, Geometrie des Werkstücks, etc.) in einem gewissen Bereich verändert.

Bei einer Überwachung des Betriebsstroms der elektrostatischen Beschichtungsanlage wird erfindungsgemäß der Grenzwert für die Sicherheitsüberwachung in Abhängigkeit von dem Anlagenstrom und/oder dem Lackierstrom festgelegt. Beispielsweise kann der Grenzwert für die Sicherheitsüberwachung berechnet werden, indem zu dem ermittelten Anlagenstrom bzw. Lackierstrom ein vorgegebener Störabstand addiert wird.

Für alle automatischen Einstellungen des Grenzwertes für die Sicherheitsüberprüfung gilt vorzugsweise als Randbedingung, dass der Grenzwert nur innerhalb eines durch die Leistung des Gerätes und/oder durch gesetzliche Vorschriften vorgegebenen Fensters variabel sein darf. Dadurch wird sichergestellt, dass bei langsamen Änderungen des Lastwiderstands (z.B. durch Verschmutzung der Beschichtungsanlage) noch eine sichere Abschaltung erfolgt, bevor gefährliche Zustände auftreten können. Im Rahmen der Erfindung ist deshalb vorzugsweise auch vorgesehen, dass überprüft wird, ob sich der Grenzwert innerhalb eines vorgegebenen zulässigen Betriebsbereiches befindet. Falls sich der berechnete Grenzwert für die Sicherheitsüberwachung außerhalb des vorgegebenen zulässigen Betriebsbereiches befindet, so kann ein Fehler-Flag gesetzt werden, damit geeignete Gegenmaßnahmen ergriffen werden können. Darüber hinaus kann der Grenzwert in diesem Fall auf den nächstgelegenen Maximal- bzw. Minimalwert des vorgegebenen zulässigen Betriebsbereichs gesetzt werden.

Der vorstehend erwähnte zulässige Betriebsbereich für den Grenzwert kann in Abhängigkeit von der aktuellen elektrischen Leistung der Hochspannungseinrichtung festgelegt werden. Es ist deshalb in einem Ausführungsbeispiel vorgesehen, dass die aktuelle Leistung der Hochspannungseinrichtung ermittelt wird, beispielsweise durch eine Strom- und Spannungsmessung. Der vorstehend erwähnte zulässige Betriebsbereich für die Sicherheitsüberwachung wird dann in Abhängigkeit von der aktuellen Leistung der Hochspannungseinrichtung festgelegt.

Erfindungsgemäß handelt es sich bei der überwachten sicherheitsrelevanten Betriebsgröße um den elektrischen Strom, mit dem das Beschichtungsmittel in der elektrostatischen Beschichtungsanlage aufgeladen wird, nämlich den Betriebsstrom.

Weiterhin ist zu erwähnen, dass die Erfindung sowohl bei einem spannungsgeregelten Betrieb als auch bei einem stromgeregelten Betrieb der elektrostatischen Beschichtungsanlage realisierbar ist.

Falls die erfindungsgemäße Überwachung ergibt, dass die sicherheitsrelevante Betriebsgröße den Grenzwert über- bzw. unterschreitet, so wird eine Sicherheitsmaßnahme eingeleitet. Dabei kann es sich beispielsweise um die Anzeige einer optischen oder akustischen Warnmeldung handeln. In den bevorzugten Ausführungsbeispielen der Erfindung umfasst die Sicherheitsmaßnahme jedoch das Abschalten der Hochspannungseinrichtung oder zumindest das Herunterregeln bzw. Heruntersteuern der sicherheitsrelevanten Betriebsgröße, damit diese in den zulässigen Wertebereich zurückkehrt.

Ferner ist zu erwähnen, dass die Erfindung nicht auf das vorstehend beschriebene Überwachungsverfahren beschränkt ist, sondern auch eine entsprechende Überwachungseinrichtung umfasst, welche das erfindungsgemäße Überwachungsverfahren ausführt. Hierzu weist die erfindungsgemäße Überwachungseinrichtung zunächst in herkömmlicher Weise ein Messglied auf, um die sicherheitsrelevante Betriebsgröße (d.h. Betriebsstrom) der Hochspannungseinrichtung der elektrostatischen Beschichtungsanlage zu messen.

Darüber hinaus weist die erfindungsgemäße Überwachungseinrichtung eine Vergleichereinheit auf, um die sicherheitsrelevante Betriebsgröße (d.h. Betriebsstrom) mit einem vorgegebenen Grenzwert zu vergleichen.

Ferner verfügt die erfindungsgemäße Überwachungseinrichtung über eine Sicherheitseinrichtung zum Einleiten einer Sicherheitsmaßnahme (z.B. Notabschaltung), wenn der Vergleich zwischen der sicherheitsrelevanten Betriebsgröße und dem vorgegebenen Grenzwert eine Störung der elektrostatischen Beschichtungsanlage anzeigt. Die erfindungsgemäße Sicherheitseinrichtung zeichnet sich gegenüber dem Stand der Technik nun dadurch aus, dass der Grenzwert betriebsabhängig flexibel eingestellt wird, was automatisch erfolgen kann.

In einem Ausführungsbeispiel weist die erfindungsgemäße Überwachungseinrichtung einen Regler auf, um die sicherheitsrelevante Betriebsgröße oder eine andere Betriebsgröße entsprechend einem vorgegebenen Soll-Wert zu regeln.

Schließlich umfasst die Erfindung auch eine komplette elektrostatische Beschichtungsanlage mit einer Überwachungseinrichtung, wie sie vorstehend beschrieben wurde.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:

Figur 1      eine schematische Darstellung einer elektrostatischen Beschichtungsanlage,

Figur 2      ein Diagramm zur Verdeutlichung der zeitlichen Schwankungen des Betriebsstroms der elektrostatischen Beschichtungsanlage,

Figur 3      ein Diagramm zur Verdeutlichung des zeitlichen Verlaufs des Betriebsstroms und der zugehörigen Anteile von Lackierstrom und Anlagenstrom bei einer Veränderung der verwendeten Spannung,

Figur 4A    eine schematische Darstellung einer erfindungsgemäßen Überwachungseinrichtung,

Figur 4B    ein Flussdiagramm, welches das von der Überwachungseinrichtung gemäß Figur 4A ausgeführte Überwachungsverfahren verdeutlicht,

Figur 5A    ein alternatives Ausführungsbeispiel einer erfindungsgemäßen Überwachungseinrichtung,

Figur 5B    ein Flussdiagramm, welches das von der in Figur 5A dargestellten Überwachungseinrichtung ausgeführte Überwachungsverfahren verdeutlicht,

Figur 6A    ein alternatives Ausführungsbeispiel einer nicht erfindungsgemäßen Überwachungseinrichtung,

Figur 6B    ein Flussdiagramm, welches das Überwachungsverfahren verdeutlicht, das von der Überwachungseinrichtung gemäß Figur 6A ausgeführt wird, sowie

Figur 7  ein alternatives nicht erfindungsgemäßes Überwachungsverfahren in Form eines Flussdiagramms.

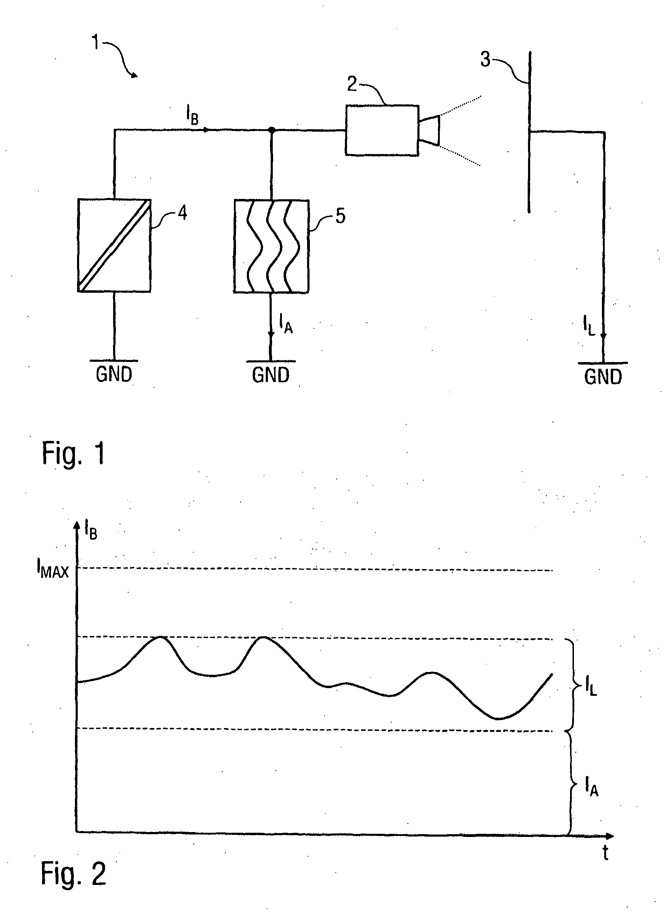

Figur 1 zeigt eine schematische Darstellung einer erfindungsgemäßen elektrostatischen Beschichtungsanlage 1, die als Applikationsgerät beispielsweise einen Rotationszerstäuber 2 aufweisen kann, um ein Kraftfahrzeugkarosseriebauteil 3 zu lackieren. Die Beschichtungsanlage 1 eignet sich jedoch grundsätzlich auch zur Lackierung anderer Bauteile. Weiterhin ist zu erwähnen, dass anstelle des Rotationszerstäubers 2 auch ein anderes elektrostatisches Applikationsgerät eingesetzt werden kann.

Das applizierte Beschichtungsmittel wird hierbei von einer Hochspannungsversorgung 4 elektrisch aufgeladen, wohingegen das zu lackierende Kraftfahrzeugkarosseriebauteil 3 elektrisch geerdet wird.

Die Hochspannungsversorgung 4 gibt dann einen Betriebsstrom $I_B$ ab, der teilweise als Anlagenstrom $I_A$ über eine Beschichtungsmittelversorgung 5 abfließt, während ein anderer Anteil in Form eines Lackierstroms $I_L$ über das zu lackierende Kraftfahrzeugkarosseriebauteil 3 abfließt. Der Betriebsstrom $I_B$ setzt sich also aus zwei Anteilen zusammen, nämlich dem Anlagenstrom $I_A$ und dem Lackierstrom $I_L$.

Der Anlagenstrom $I_A$ ist im Wesentlichen abhängig von der Ausgangsspannung der Hochspannungsversorgung 4 und dem elektrischen Widerstand des verwendeten Beschichtungsmittels und ggf. des Spülmittels. Bei konstanter Ausgangsspannung ist deshalb auch der Anlagenstrom $I_A$ konstant.

Der Lackierstrom $I_L$ ist dagegen eine variable Größe, die sich in Abhängigkeit diverser Parameter (z.B. Abstand zwischen dem Rotationszerstäuber 2 und dem Kraftfahrzeugkarosseriebauteil 3, Geometrie des Kraftfahrzeugkarosseriebauteils 3, etc.) in einem gewissen Bereich verändert, wie auch aus Figur 2 ersichtlich ist.

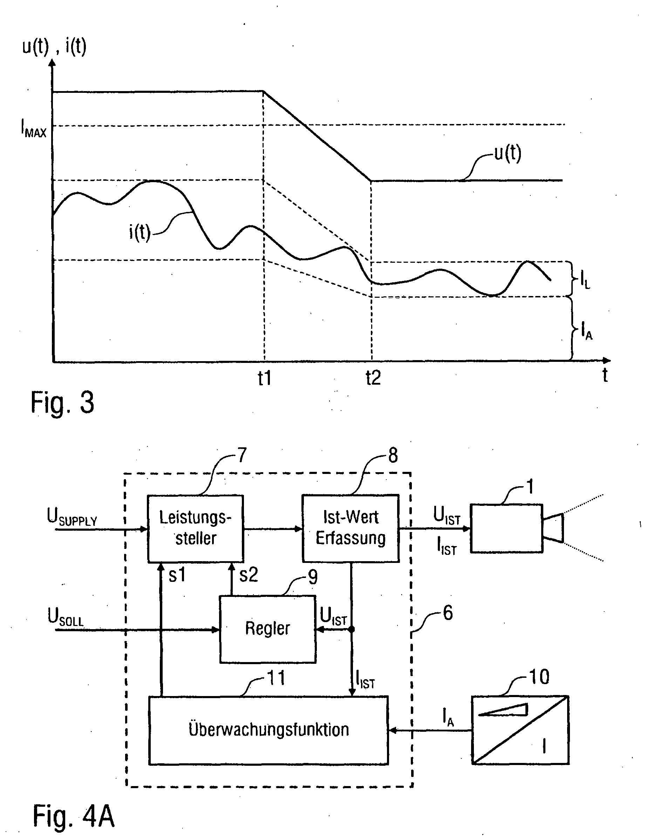

Aus Figur 3 ist weiterhin ersichtlich, dass eine Verringerung der Ausgangsspannung u(t) in dem Zeitraum zwischen t=t1 und t=t2 dazu führt, dass bei niedrigerer Spannung ein wesentlich größerer Störabstand entsteht, wodurch die Empfindlichkeit des Systems zur Erkennung kritischer Zustände sinkt. Es besteht deshalb ein Bedürfnis, die Beschichtungsanlage 1 so zu verbessern, dass ein möglichst geringer Störabstand gewährleistet ist.

Figur 4A zeigt eine erfindungsgemäße Überwachungseinrichtung 6, welche die Aufgabe hat, eine Sicherheitsüberwachung des Betriebsstroms $I_B$ durchzuführen, um sicherheitskritische Betriebszustände zu verhindern.

Die Überwachungseinrichtung 6 weist zunächst in herkömmlicher Weise einen Leistungssteller 7, eine Ist-Wert-Erfassung 8 und einen Regler 9 auf. Die Ist-Wert-Erfassung 8 ermittelt einen Ist-Wert $I_{IST}$ des Betriebsstroms $I_B$, sowie einen Ist-Wert $U_{IST}$ und leitet den Ist-Wert $U_{IST}$ an den Regler 9 weiter, der aus einem vorgegebenen Soll-Wert $U_{SOLL}$ und dem ermittelten Ist-Wert $U_{IST}$ die Soll-Ist-Abweichung berechnet und den Leistungssteller 7 mit einem entsprechenden Regelsignal s2 ansteuert, so dass der Ist-Wert $U_{IST}$ der Betriebsspannung auf den vorgegebenen Soll-Wert $U_{SOLL}$ eingeregelt wird und sich entsprechend der Betriebsstrom $I_B$ einstellt.

Darüber hinaus ist ein Messglied 10 vorgesehen, welches den Anlagenstrom $I_A$ misst und an eine Sicherheitseinrichtung 11 übermittelt. Die Sicherheitseinrichtung 11 berechnet dann aus dem Anlagenstrom $I_A$ einen entsprechenden Grenzwert $I_{GRENZ}$ und vergleicht diesen mit dem Ist-Wert $I_{IST}$ des Betriebsstroms $I_B$. Falls der Ist-Wert $I_{ISt}$ des Betriebsstroms $I_B$ den so berechneten Grenzwert $I_{GRENZ}$ überschreitet, so erzeugt die Sicherheitseinrichtung 11 ein Stellsignal s1 zur Ansteuerung des Leistungsstellers 7, der daraufhin entweder den Betriebsstrom $I_B$ entsprechend zurückregelt oder das System abschaltet.

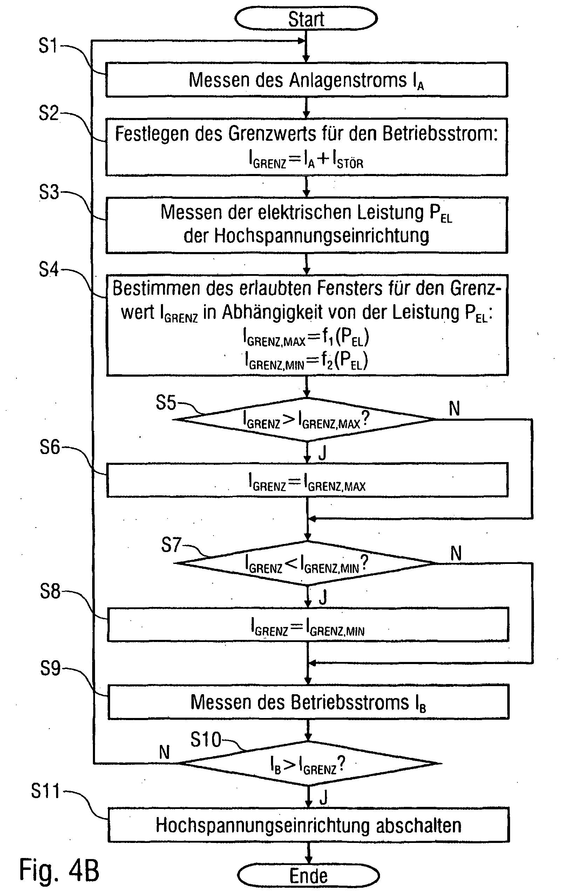

Im Folgenden wird nun unter Bezugnahme auf das Flussdiagramm in Figur 4B das erfindungsgemäße Überwachungsverfahren beschrieben, wie es von der Überwachungseinrichtung 6 gemäß Figur 4A ausgeführt wird.

In einem ersten Schritt S1 misst zunächst das Messglied 10 den Anlagenstrom $I_A$.

Anschließend legt die Sicherheitseinrichtung 11 den Grenzwert $I_{GRENZ}$ für den Betriebsstrom $I_B$ in Abhängigkeit von dem gemessenen Anlagenstrom $I_A$ und einem vorgegebenen Störabstand $I_{STÖR}$ wie folgt fest:

$$I_{GRENZ} = I_A + I_{STÖR}.$$

Anschließend wird dann die elektrische Leistung $P_{EL}$ der Hochspannungsversorgung 4 gemessen, was in einem Schritt S3 erfolgt und zur Vereinfachung nicht näher dargestellt ist.

In einem anschließenden Schritt S4 wird dann in Abhängigkeit von der elektrischen Leistung $P_{EL}$ der Hochspannungsversorgung 4 ein erlaubtes Fenster für den Grenzwert $I_{GRENZ}$ bestimmt.

In einem Schritt S5 wird dann überprüft, ob der zuvor berechnete Grenzwert $I_{GRENZ}$ den maximal zulässigen Grenzwert $I_{GRENZ,MAX}$ überschreitet.

Falls dies der Fall ist, so wird der Grenzwert $I_{GRENZ}$ in einem Schritt S6 auf den maximal zulässigen Grenzwert $I_{GRFNZ,MAX}$ festgesetzt.

Andernfalls wird in einem weiteren Schritt S7 überprüft, ob der zuvor berechnete Grenzwert $I_{GRENZ}$ den minimal zulässigen Grenzwert $I_{GRENZ,MIN}$ unterschreitet.

Falls dies der Fall ist, so wird der Grenzwert $I_{GRENZ}$ in einem Schritt S8 mit dem minimal zulässigen Grenzwert $I_{GRENZ,MIN}$ gleichgesetzt.

Anschließend wird dann in einem Schritt S9 der Betriebsstrom $I_B$ gemessen, wozu die Ist-Wert-Erfassung 8 dient.

Daraufhin wird dann in einem Schritt S10 überprüft, ob der gemessene Betriebsstrom $I_B$ den Grenzwert $I_{GRENZ}$ überschreitet.

Falls dies der Fall ist, so wird die Hochspannungseinrichtung 4 in einem Schritt S11 abgeschaltet, indem die Sicherheitseinrichtung 11 den Leistungssteller 7 entsprechend ansteuert.

Andernfalls wird das in Figur 4B dargestellte Überwachungsverfahren in einer Endlosschleife erneut ausgeführt.

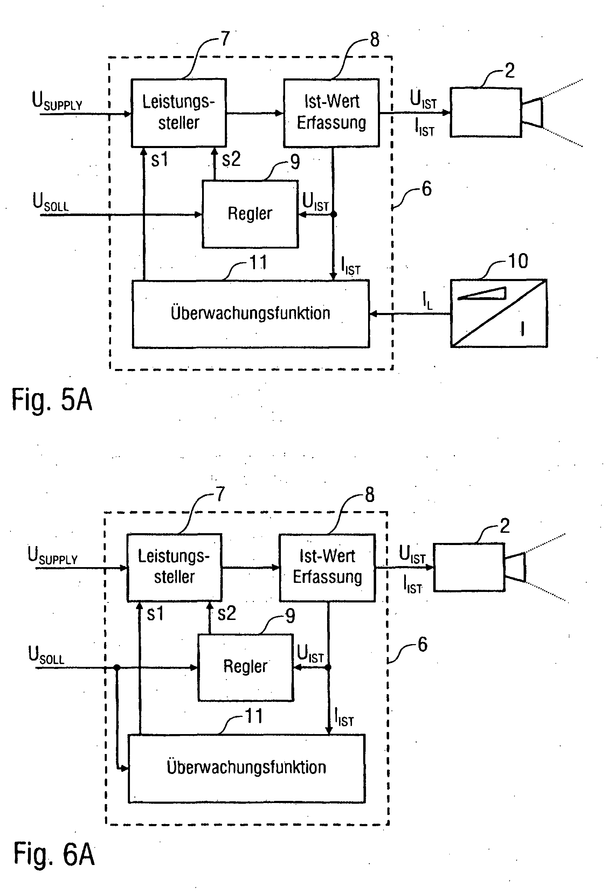

Die in Figur 5A dargestellte Überwachungseinrichtung 6 stimmt weitgehend mit der vorstehend beschriebenen und in Figur 4A dargestellten Überwachungseinrichtung 6 überein, so dass zur Vermeidung von Wiederholungen auf die vorstehende Beschreibung verwiesen wird, wobei für entsprechende Einzelheiten dieselben Bezugszeichen verwendet werden.

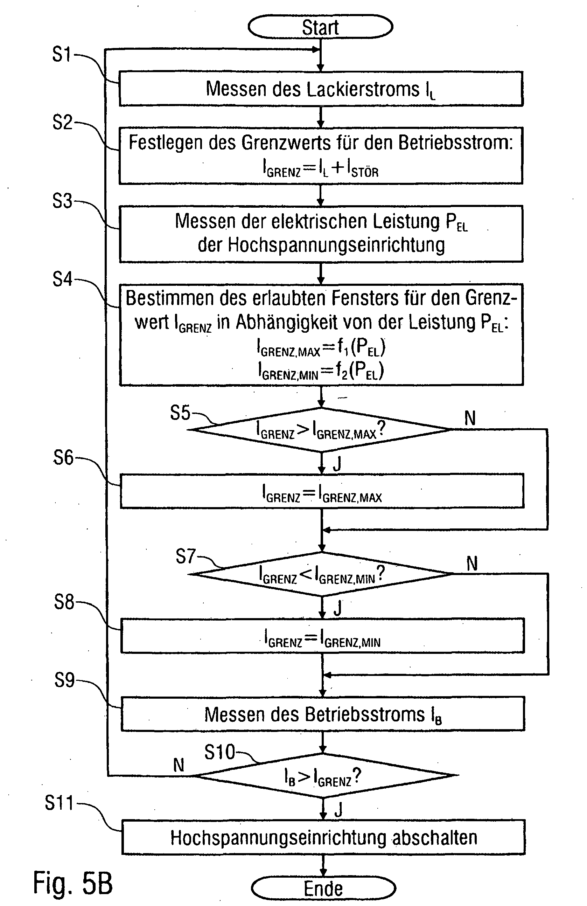

Die einzige Besonderheit dieses Ausführungsbeispiels besteht darin, dass der Grenzwert $I_{GRENZ}$ nicht in Abhängigkeit von dem Anlagenstrom $I_A$ berechnet wird, sondern in Abhängigkeit von dem Lackierstrom $I_L$. Ansonsten stimmt dieses Ausführungsbeispiel und auch das Flussdiagramm gemäß Figur 5B mit dem vorstehenden Ausführungsbeispiel überein, so dass auf die vorstehenden Ausführungen verwiesen wird.

Das Ausführungsbeispiel gemäß Figur 6A stimmt teilweise mit den vorstehend beschriebenen Ausführungsbeispielen überein, so dass zur Vermeidung von Wiederholungen auf die vorstehende Beschreibung verwiesen wird, wobei für entsprechende Einzelheiten dieselben Bezugszeichen verwendet werden.

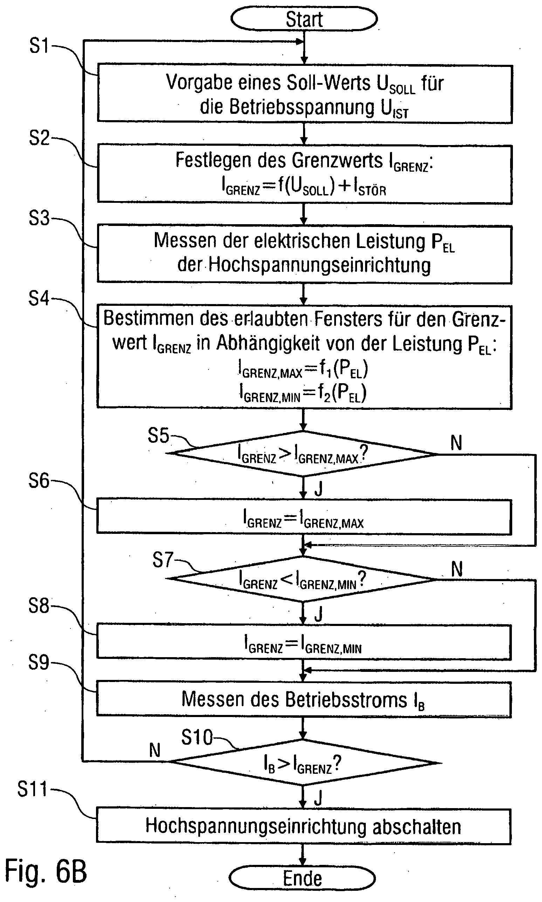

Eine Besonderheit dieses Ausführungsbeispiels besteht darin, dass auf das Messglied 10 verzichtet werden kann, da die Berechnung des Grenzwertes $I_{GRENZ}$ entweder in Abhängigkeit von dem vorgegebenen Soll-Wert $U_{SOLL}$ oder dem aus dem vorgegebenen Sollwert $U_{SOLL}$ resultierenden Wert $I_{SOLL}$ erfolgt. Dementsprechend wird in Schritt S2 in dem Flussdiagramm gemäß Figur 6B der Grenzwert $I_{GRENZ}$ in Abhängigkeit von dem vorgegebenen Soll-Wert $U_{SOLL}$ und dem vorgegebenen Störabstand $I_{STÖR}$ wie folgt berechnet:

$$I_{GRENZ} = f(U_{SOLL}) + I_{STÖR}$$

Ansonsten stimmt auch dieses Ausführungsbeispiel im Wesentlichen mit den vorstehenden Ausführungsbeispielen überein, so dass zur' Vermeidung von Wiederholungen auf die vorstehende Beschreibung verwiesen wird.

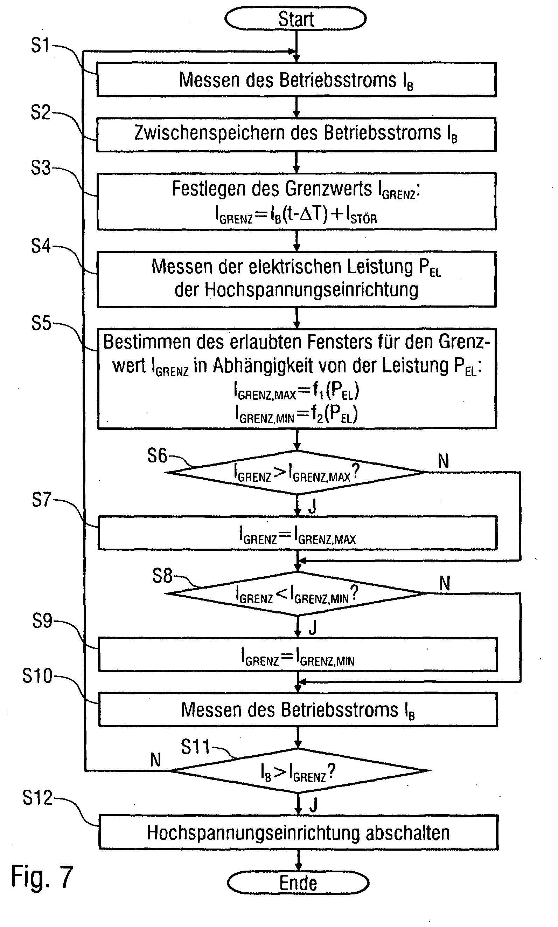

Schließlich zeigt Figur 7 in Form eines Flussdiagramms ein alternatives Ausführungsbeispiel eines nicht erfindungsgemäßen Überwachungsverfahrens, das sich im Wesentlichen durch die Berechnung des Grenzwertes $I_{GRENZ}$ in den Schritten S2 und S3 von den vorstehend beschriebenen Ausführungsbeispielen unterscheidet.

So sieht dieses Ausführungsbeispiel vor, dass im Betrieb der Beschichtungsanlage 1 laufend der Betriebsstrom $I_B$ gemessen und zwischengespeichert wird. Der Grenzwert $I_{GRENZ}$ wird dann in Abhängigkeit von einem vorangegangenen Betriebsstrom $I_B(t-\Delta T)$ und dem vorgegebenen Störabstand $I_{STÖR}$ wie folgt berechnet:

$$I_{GRENZ} = I_B(t-\Delta T) + I_{STÖR}.$$

Diese Variante hat den Vorteil, dass keine zusätzlichen Sensoren zur Messung von Anlagenstrom $I_A$ oder Lackierstrom $I_L$ erforderlich sind. Diese Variante beruht auf der Tatsache, dass unzulässige Überströme beispielsweise bei einem Funkenüberschlag sehr schnell entstehen, so dass die zeitliche Nachführung des Grenzwertes sicherstellt, dass trotz des variablen Grenzwertes noch eine sichere Abschaltung erfolgen kann.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen.

Bezugszeichenliste:

| | |
|---|---|
| 1 | Beschichtungsanlage |
| 2 | Rotationszerstäuber |
| 3 | Kraftfahrzeugkarosseriebauteil |
| 4 | Hochspannungsversorgung |
| 5 | Beschichtungsmittelversorgung |
| 6 | Überwachungseinrichtung |
| 7 | Leistungssteller |
| 8 | Ist-Wert-Erfassung |
| 9 | Regler |
| 10 | Messglied |
| 11 | Sicherheitseinrichtung |
| $I_A$ | Anlagenstrom |
| $I_B$ | Betriebsstrom |
| $I_L$ | Lackierstrom |

**Patentansprüche**

1.　Überwachungsverfahren für eine elektrostatische Beschichtungsanlage (1), die Bauteile mit einem Beschichtungsmittel beschichtet, das mittels einer Hochspannungseinrichtung (4) elektrisch aufgeladen wird,

wobei der zur Aufladung des Beschichtungsmittels dienende Betriebsstrom ($I_B$) der elektrostatischen Beschichtungsanlage (1) aus einem Anlagenstrom ($I_A$) und einem Lackierstrom ($I_L$) besteht, wobei der Anlagenstrom ($I_A$) ein Anteil des Betriebsstroms ($I_B$) ist, der über die Beschichtungsanlage (1) und nicht über das zu beschichtende Bauteil (3) abfließt, während der Lackierstrom ($I_L$) ein Anteil des Betriebsstroms ($I_B$) ist, der über das zu beschichtende Bauteil (3) abfließt und nicht über die Beschichtungsanlage (1),

wobei das Überwachungsverfahren die folgenden Schritte aufweist:

a) Ermitteln einer ersten Betriebsgröße ($I_B$) der Hochspannungseinrichtung (4),

b) Einstellen eines Grenzwerts ($I_{GRENZ}$) betriebsabhängig flexibel in Abhängigkeit von dem Wert einer im Betrieb der Beschichtungsanlage (1) laufend ermittelten Betriebsgröße ($I_A$, $I_L$),

c) Vergleichen der ersten Betriebsgröße ($I_B$) mit dem vorgegebenen Grenzwert ($I_{GRENZ}$),

d) Einleiten einer Sicherheitsmaßnahme, wenn der Vergleich zwischen der ersten Betriebsgröße ($I_B$) und dem Grenzwert ($I_{GRENZ}$) eine sicherheitsrelevante Störung der elektrostatischen Beschichtungsanlage (1) anzeigt,

**dadurch gekennzeichnet,**

e) dass die zu dem Vergleich mit dem Grenzwert ($I_{GRENZ}$) herangezogene erste Betriebsgröße der Betriebsstrom ($I_B$) der Lackieranlage ist, und

f) dass folgende Schritte zur Festlegung des Grenzwerts ($I_{GRENZ}$) durchgeführt werden:

f1) Ermitteln des Anlagenstroms ($I_A$) und Festlegen des Grenzwerts ($I_{GRENZ}$) in Abhängigkeit von dem ermittelten Anlagenstrom ($I_A$); und/oder

f2) Ermitteln des Lackierstroms ($I_L$) und Festlegen des Grenzwerts ($I_{GRENZ}$) in Abhängigkeit von dem ermittelten Lackierstrom ($I_L$).

2. Überwachungsverfahren nach Anspruch 1, **dadurch gekennzeichnet, dass** der Grenzwert ($I_{GRENZ}$) berechnet wird, indem zu dem ermittelten Anlagenstrom ($I_A$) oder zu dem ermittelten Lackierstrom ($I_L$) ein vorgegebener Störabstand ($I_{STÖR}$) addiert wird.

3. Überwachungsverfahren nach einem der vorhergehenden Ansprüche, **gekennzeichnet durch** folgende Schritte:

a) Laufendes Ermitteln eines Ist-Werts ($I_{IST}$) des Betriebsstroms ($I_B$) der Lackieranlage,

b) Zwischenspeichern der ermittelten Ist-Werte ($I_{IST}$),

c) Festlegen des aktuellen Grenzwerts ($I_{GRENZ}$) in Abhängigkeit von mindestens einem zuvor ermittelten und zwischengespeicherten Ist-Werte ($I_{IST}$).

4. Überwachungsverfahren nach Anspruch 3, **dadurch gekennzeichnet, dass** der aktuelle Grenzwert ($I_{GRENZ}$) ermittelt wird, indem zu einem der zuvor ermittelten und zwischengespeicherten Ist-Werte ($I_{IST}$) ein vorgegebener Störabstand ($I_{STÖR}$) hinzu addiert wird.

5. Überwachungsverfahren nach einem der vorhergehenden Ansprüche, **gekennzeichnet durch** folgende Schritte:

a) Überprüfen, ob sich der Grenzwert ($I_{GRENZ}$) innerhalb eines vorgegebenen zulässigen Betriebsbereichs befindet,

b) Setzen eines Fehler-Flags, falls sich der Grenzwert ($I_{GRENZ}$) außerhalb des vorgegebenen zulässigen Betriebsbereichs befindet, und/oder

c) Setzen des Grenzwerts ($I_{GRENZ}$) auf den nächstgelegenen maximal- bzw. Minimalwert des vorgegebenen zulässigen Betriebsbereichs, falls sich der Grenzwert ($I_{GRENZ}$) außerhalb des vorgegebenen zulässigen Betriebsbereichs befindet.

6. Überwachungsverfahren nach Anspruch 5, **gekennzeichnet durch** folgende Schritte:

a) Ermitteln der aktuellen Leistung ($P_{EL}$) der Hochspannungseinrichtung (4),

b) Festlegen des vorgegebenen Betriebsbereichs in Abhängigkeit von der aktuellen Leistung ($P_{EL}$) der Hochspannungseinrichtung (4).

7. Überwachungsverfahren nach einem der vorhergehenden Ansprüche, **dadurch gekennzeichnet, dass** die Sicherheitsmaßnahme folgende Maßnahmen umfasst:

a) Anzeigen einer optischen oder akustischen Warnmeldung und/oder

b) Abschalten der Hochspannungseinrichtung (4) und/oder

c) Verringern der ersten elektrischen Betriebsgröße der Hochspannungseinrichtung (4).

8. Überwachungseinrichtung (6) für eine Hochspannungseinrichtung (4) zur elektrischen Aufladung eines Beschichtungsmittels in einer elektrostatischen Beschichtungsanlage (1), wobei der zur Aufladung des Beschichtungsmittels dienende Betriebsstrom ($I_B$) der elektrostatischen Beschichtungsanlage (1) aus einem Anlagenstrom ($I_A$) und einem Lackierstrom ($I_L$) besteht, wobei der Anlagenstrom ($I_A$) ein Anteil des Betriebsstroms ($I_B$) ist, der über die Beschichtungsanlage (1) und nicht über das zu beschichtende Bauteil (3) abfließt, während der Lackierstrom ($I_L$) ein Anteil des Betriebsstroms ($I_B$) ist, der über das zu beschichtende Bauteil (3) abfließt und nicht über die Beschichtungsanlage (1), mit

> a) einem ersten Messglied (8) zur Messung einer ersten Betriebsgröße ($I_B$) der Hochspannungseinrichtung (4),
> b) einer Vergleichereinheit (11) zum Vergleichen der ersten Betriebsgröße ($I_B$) mit einem vorgegebenen Grenzwert ($I_{GRENZ}$), und
> c) einer Sicherheitseinrichtung (11) zum Einleiten einer Sicherheitsmaßnahme, wenn der Vergleich zwischen der ersten Betriebsgröße ($I_B$) und dem Grenzwert ($I_{GRENZ}$) eine sicherheitsrelevante Störung der elektrostatischen Beschichtungsanlage (1) anzeigt,
> d) wobei die Sicherheitseinrichtung (11) den Grenzwert ($I_{GRENZ}$) betriebsabhängig flexibel in Abhängigkeit von dem Wert einer im Betrieb der Beschichtungsanlage (1) laufend gemessenen Betriebsgröße ($I_A$, $I_L$) einstellt,

**dadurch gekennzeichnet,**

> e) dass die zu dem Vergleich mit dem Grenzwert ($I_{GRENZ}$) herangezogene erste Betriebsgröße der Betriebsstrom ($I_B$) der Lackieranlage ist, und
> f) dass die Sicherheitseinrichtung (11) den Grenzwert ($I_{GRENZ}$) in Abhängigkeit von dem Anlagenstrom ($I_A$) und/oder dem Lackierstrom ($I_L$) einstellt.

9. Überwachungseinrichtung (6) nach Anspruch 8, **dadurch gekennzeichnet, dass** zur Messung des Anlagenstroms ($I_A$) oder des Lackierstroms ($I_L$) ein zweites Messglied (10) vorgesehen ist.

10. Elektrostatische Beschichtungsanlage (1) mit einer Überwachungseinrichtung (6) nach einem der Ansprüche 8 bis 9.

## Claims

1. A monitoring method for an electrostatic coating installation (1), which coats components with a coating agent, which is charged electrically by means of a high voltage device (4), wherein the operating current ($I_B$) of the electrostatic coating installation (1) serving to charge the coating agent consists of an installation current ($I_A$) and a coating current ($I_L$), wherein the installation current ($I_A$) is a fraction of the operating current ($I_B$) which flows away via the coating installation (1) and not via the component (3) to be coated, while the coating current ($I_L$) is a fraction of the operating current ($I_B$) which flows away via the component (3) to be coated and not via the coating installation (1),
wherein the monitoring method comprising the following steps:

> a) ascertaining a first operating variable ($I_B$) of the high voltage device (4),
> b) setting a limit value ($I_{GRENZ}$) flexibly as a function of operation depending on the value of an operating variable ($I_A$, $I_L$) continuously measured during operation of the coating installation (1),
> c) comparing the first operating variable ($I_B$) with a limit value ($I_{GRENZ}$),
> d) initiating a safety measure if the comparison between the first operating variable ($I_B$) and the limit value ($I_{GRENZ}$) indicates a malfunction of the electrostatic coating installation (1),

**characterised in**

> e) that the first operating variable considered for comparison with the limit value ($I_{GRENZ}$) is the operating current ($I_B$) of the electrostatic coating installation (1), and
> f) that the following steps are carried out for setting the limit value ($I_{GRENZ}$) :

>> f1) determining the installation current ($I_A$) and setting the limit value ($I_{GRENZ}$) as a function of the determined installation current ($I_A$), and/or
>> f2) determining the coating current ($I_L$) and setting the limit value ($I_{GRENZ}$) as a function of the determined coating current ($I_L$).

2. A monitoring method according to claim 1, **characterised in that** the limit value ($I_{GRENZ}$) is calculated by adding a specified noise ratio ($I_{STÖR}$) to the ascertained installation current ($I_A$) or to the ascertained coating current ($I_L$).

3. A monitoring method according to any one of the preceding claims, **characterised by** the following steps:

> a) continuously ascertaining an actual value ($I_{IST}$) of the operating current ($I_B$) of the coating installation,
> b) temporarily storing the ascertained actual values ($I_{IST}$),
> c) fixing the instantaneous limit value ($I_{GRENZ}$) as a function of at least one of the previously ascertained and temporarily stored actual values ($I_{IST}$).

4. A monitoring method according to claim 3, **characterised in that** the instantaneous limit value ($I_{GRENZ}$) is ascertained by adding a specified noise ratio ($I_{STÖR}$) to one of the previously ascertained and temporarily stored actual values ($I_{IST}$).

5. A monitoring method according to any one of the preceding claims, **characterised by** the following steps:

   a) checking whether the limit value ($I_{GRENZ}$) is within a specified permissible operating range,
   b) setting an error flag if the limit value ($I_{GRENZ}$) is outside the specified permissible operating range, and/or
   c) setting the limit value ($I_{GRENZ}$) to the nearest maximum or minimum value of the specified permissible operating range, if the limit value ($I_{GRENZ}$) is outside the specified permissible operating range.

6. A monitoring method according to claim 5, **characterised by** the following steps:

   a) ascertaining the instantaneous power ($P_{EL}$) of the high voltage device (4),
   b) fixing the specified operating range as a function of the instantaneous power ($P_{EL}$) of the high voltage device (4).

7. A monitoring method according to any one of the preceding claims, **characterised in that** the safety measure includes the following measures:

   a) generating an optical or acoustic alarm signal and/or
   b) switching off the high voltage device (4) and/or
   c) reducing the first electrical operating variable of the high voltage device (4).

8. A monitoring device (6) for a high voltage device (4) for electrical charging of a coating agent in an electrostatic coating installation (1), wherein the operating current ($I_B$) of the electrostatic coating installation (1) serving to charge the coating agent consists of an installation current ($I_A$) and a coating current ($I_L$), wherein the installation current ($I_A$) is a fraction of the operating current ($I_B$) which flows away via the coating installation (1) and not via the component (3) to be coated, while the coating current ($I_L$) is a fraction of the operating current ($I_B$) which flows away via the component (3) to be coated and not via the coating installation (1), having

   a) a first measuring element (8) for measuring a first operating variable ($I_B$) of the high voltage device (4),
   b) a comparator unit (11) for comparing the first operating variable ($I_B$) with a specified limit value ($I_{GRENZ}$), and
   c) a safety device (11) for initiating a safety measure if the comparison between the first operating variable ($I_B$) and the limit value ($I_{GRENZ}$) indicates a safety-relevant malfunction of the electrostatic coating installation (1),
   d) wherein the safety device (11) sets the limit value ($I_{LIMIT}$) flexibly as a function of operation and of the value of an operating variable ($I_A$, $I_L$) continuously measured during operation of the coating installation (1),

   **characterised in**

   e) that the first operating variable considered for comparison with the limit value ($I_{GRENZ}$) is the operating current ($I_B$) of the coating installation (1), and
   f) the safety device (11) sets the limit value ($I_{GRENZ}$) as a function of the installation current ($I_A$) and/or the coating current ($I_L$).

9. A monitoring device (6) according to claim 8, **characterised in that,** a second measuring element (10) is provided for measuring the installation current ($I_A$) or the coating current ($I_L$.

10. An electrostatic coating installation (1) with a monitoring device (6) according to any one of the claims 8 to 9.

**Revendications**

1. Procédé de surveillance pour une installation de revêtement électrostatique (1), qui revêt des pièces avec un produit de revêtement qui est chargé électriquement au produit d'un dispositif haute tension (4), dans lequel le courant de service ($I_B$) de l'installation de revêtement électrostatique (1), servant à la charge du produit de revêtement,, est constitué d'un courant d'installation ($I_A$) et d'un courant de peinture ($I_L$), dans lequel le courant d'installation ($I_A$) est une partie du courant de service ($I_B$) qui circule à travers l'installation de revêtement (1) et pas à travers la pièce à revêtir (3), tandis que le courant de peinture ($I_L$) est une partie du courant de service ($I_B$) qui circule à travers la pièce à revêtir (3) et pas à travers l'installation de revêtement (1), dans lequel le procédé de surveillance comprend les étapes suivantes :

   a) détermination d'une première grandeur de service ($I_B$) du dispositif haute tension (4),

b) réglage d'une valeur limite ($I_{GRENZ}$) flexible selon le fonctionnement en fonction de la valeur d'une grandeur de service ($I_A$, $I_L$) déterminée en continu pendant le fonctionnement de l'installation de revêtement (1)

c) comparaison de la première grandeur de service ($I_B$) avec la valeur limite ($I_{GRENZ}$) prédéterminée,

d) déclenchement d'une mesure de sécurité lorsque la comparaison entre la première grandeur de service ($I_B$) et la valeur limite ($I_{GRENZ}$) indique un dysfonctionnement sur le plan de la sécurité de l'installation de revêtement électrostatique (1),

**caractérisé en ce que**

e) la première grandeur de service utilisée pour la comparaison avec la valeur limite ($I_{GRENZ}$) est le courant de service ($I_B$) de l'installation de peinture et

f) les étapes suivantes sont exécutées pour la détermination de la valeur limite ($I_{GRENZ}$) :

f1) détermination du courant d'installation ($I_A$) et détermination de la valeur limite ($I_{GRENZ}$) en fonction du courant d'installation ($I_A$) déterminé ; et/ou

f2) détermination du courant de peinture ($I_L$) et détermination de la valeur limite ($I_{GRENZ}$) en fonction du courant de peinture ($I_L$) déterminé.

2. Procédé de surveillance selon la revendication 1, **caractérisé en ce que** la valeur limite ($I_{GRENZ}$) est calculée en ajoutant au courant d'installation ($I_A$) déterminé ou au courant de peinture ($I_L$) déterminé un rapport signal/bruit ($I_{STÖR}$) prédéterminé.

3. Procédé de surveillance selon l'une des revendications précédentes, **caractérisé par** les étapes suivantes :

a) détermination en continu d'une valeur réelle ($I_{IST}$) du courant de service ($I_B$) de l'installation de peinture,

b) stockage des valeurs réelles ($I_{IST}$) déterminées,

c) définition de la valeur limite ($I_{GRENZ}$) actuelle en fonction d'au moins une valeur réelle ($I_{IST}$) précédemment déterminée et stockée.

4. Procédé de surveillance selon la revendication 3, **caractérisé en ce que** la valeur limite ($I_{GRENZ}$) actuelle est déterminée en ajoutant à une valeur réelle ($I_{IST}$) précédemment déterminée et stockée un rapport signal/bruit ($I_{STÖR}$) prédéterminé.

5. Procédé de surveillance selon l'une des revendications précédentes, **caractérisé par** les étapes suivantes :

a) vérification si la valeur limite ($I_{GRENZ}$) se trouve à l'intérieur d'une plage de service admissible prédéterminée,

b) plantage d'un drapeau d'erreur si la valeur limite ($I_{GRENZ}$) se trouve hors de la plage de service admissible prédéterminée et/ou

c) réglage de la valeur limite ($I_{GRENZ}$) à la valeur maximale respectivement minimale la plus proche de la plage de service admissible prédéterminée si la valeur limite ($I_{GRENZ}$) se trouve hors de la plage de service admissible prédéterminée.

6. Procédé de surveillance selon la revendication 5, **caractérisé par** les étapes suivantes :

a) détermination de la puissance ($P_{EL}$) actuelle du dispositif haute tension (4),

b) fixation de la plage de service définie en fonction de la puissance ($P_{EL}$) actuelle du dispositif haute tension (4).

7. Procédé de surveillance selon l'une quelconque des revendications précédentes, **caractérisé en ce que** la mesure de sécurité comprend les mesures suivantes :

a) affichage d'un message d'alarme optique ou acoustique, et/ou

b) déconnexion du dispositif haute tension (4), et/ou

c) diminution de la première grandeur de service électrique du dispositif haute tension (4).

8. Dispositif de surveillance (6) pour un dispositif haute tension (4) pour la charge électrique d'un produit de revêtement dans une installation de revêtement électrostatique (1), dans lequel le courant de service ($I_B$) de l'installation de revêtement électrostatique (1), servant à la charge du produit de revêtement,, est constitué d'un courant d'installation ($I_A$) et d'un courant de peinture ($I_L$), dans lequel le courant d'installation ($I_A$) est une partie du courant de service ($I_B$) qui circule à travers l'installation de revêtement (1) et pas à travers la pièce à revêtir (3), tandis que le courant de peinture ($I_L$) est une partie du courant de service ($I_B$) qui circule à travers la pièce à revêtir (3) et pas à travers l'installation de revêtement (1), avec

a) un premier organe de mesure (8) destiné à mesurer une première grandeur de service ($I_B$) du dispositif haute tension (4),

b) une unité de comparaison (11) destinée à comparer la première grandeur de service ($I_B$)

à une valeur limite ($I_{GRENZ}$) prédéterminée, et

c) un dispositif de sécurité (11) destiné à déclencher une mesure de sécurité lorsque la comparaison entre la première grandeur de service ($I_B$) et la valeur limite ($I_{GRENZ}$) indique un dysfonctionnement sur le plan de la sécurité de l'installation de revêtement électrostatique (1),

d) dans lequel le dispositif de sécurité (11) règle la valeur limite ($I_{GRENZ}$) en dépendance avec le fonctionnement de manière flexible en fonction de la valeur d'une grandeur de service ($I_A$, IL) mesurée en continu au cours du fonctionnement de l'installation de revêtement (1),

**caractérisé en ce que**

e) la première grandeur de service utilisée pour la comparaison avec la valeur limite ($I_{GRENZ}$) est le courant de service ($I_B$) de l'installation de peinture et

f) le dispositif de sécurité (11) règle la valeur limite ($I_{GRENZ}$) en fonction du courant d'installation ($I_A$) et/ou du courant de peinture ($I_L$).

9. Dispositif de surveillance (6) selon la revendication 8, **caractérisé en ce que**, pour la mesure du courant d'installation ($I_A$) ou du courant de peinture ($I_L$), est prévu un deuxième organe de mesure (10).

10. Installation de revêtement électrostatique (1) avec un dispositif de surveillance (6) selon l'une des revendications 8 à 9.

Fig. 1

Fig. 2

Fig. 3

Fig. 4A

S1 — Start

**S1** — Messen des Anlagenstroms $I_A$

**S2** — Festlegen des Grenzwerts für den Betriebsstrom:
$$I_{GRENZ} = I_A + I_{STÖR}$$

**S3** — Messen der elektrischen Leistung $P_{EL}$ der Hochspannungseinrichtung

**S4** — Bestimmen des erlaubten Fensters für den Grenzwert $I_{GRENZ}$ in Abhängigkeit von der Leistung $P_{EL}$:
$$I_{GRENZ,MAX} = f_1(P_{EL})$$
$$I_{GRENZ,MIN} = f_2(P_{EL})$$

**S5** — $I_{GRENZ} > I_{GRENZ,MAX}$? — N

J

**S6** — $I_{GRENZ} = I_{GRENZ,MAX}$

**S7** — $I_{GRENZ} < I_{GRENZ,MIN}$? — N

J

**S8** — $I_{GRENZ} = I_{GRENZ,MIN}$

**S9** — Messen des Betriebsstroms $I_B$

**S10** — N — $I_B > I_{GRENZ}$?

J

**S11** — Hochspannungseinrichtung abschalten

## Fig. 4B

Ende

Fig. 5A

Fig. 6A

Start

S1 — Messen des Lackierstroms $I_L$

S2 — Festlegen des Grenzwerts für den Betriebsstrom:
$$I_{GRENZ} = I_L + I_{STÖR}$$

S3 — Messen der elektrischen Leistung $P_{EL}$ der Hochspannungseinrichtung

S4 — Bestimmen des erlaubten Fensters für den Grenzwert $I_{GRENZ}$ in Abhängigkeit von der Leistung $P_{EL}$:
$$I_{GRENZ,MAX} = f_1(P_{EL})$$
$$I_{GRENZ,MIN} = f_2(P_{EL})$$

S5 — $I_{GRENZ} > I_{GRENZ,MAX}$? — N

J

S6 — $I_{GRENZ} = I_{GRENZ,MAX}$

S7 — $I_{GRENZ} < I_{GRENZ,MIN}$? — N

J

S8 — $I_{GRENZ} = I_{GRENZ,MIN}$

S9 — Messen des Betriebsstroms $I_B$

S10 — N — $I_B > I_{GRENZ}$?

J

S11 — Hochspannungseinrichtung abschalten

Fig. 5B

Ende

Start

S1 — Vorgabe eines Soll-Werts $U_{SOLL}$ für die Betriebsspannung $U_{IST}$

S2 — Festlegen des Grenzwerts $I_{GRENZ}$:
$$I_{GRENZ} = f(U_{SOLL}) + I_{STÖR}$$

S3 — Messen der elektrischen Leistung $P_{EL}$ der Hochspannungseinrichtung

S4 — Bestimmen des erlaubten Fensters für den Grenzwert $I_{GRENZ}$ in Abhängigkeit von der Leistung $P_{EL}$:
$$I_{GRENZ,MAX} = f_1(P_{EL})$$
$$I_{GRENZ,MIN} = f_2(P_{EL})$$

S5 — $I_{GRENZ} > I_{GRENZ,MAX}$? — N

J

S6 — $I_{GRENZ} = I_{GRENZ,MAX}$

S7 — $I_{GRENZ} < I_{GRENZ,MIN}$? — N

J

S8 — $I_{GRENZ} = I_{GRENZ,MIN}$

S9 — Messen des Betriebsstroms $I_B$

S10 — $I_B > I_{GRENZ}$? — N

J

S11 — Hochspannungseinrichtung abschalten

Fig. 6B

Ende

Start

S1 — Messen des Betriebsstroms $I_B$

S2 — Zwischenspeichern des Betriebsstroms $I_B$

S3 — Festlegen des Grenzwerts $I_{GRENZ}$:
$I_{GRENZ} = I_B(t-\Delta T) + I_{STÖR}$

S4 — Messen der elektrischen Leistung $P_{EL}$ der Hochspannungseinrichtung

S5 — Bestimmen des erlaubten Fensters für den Grenzwert $I_{GRENZ}$ in Abhängigkeit von der Leistung $P_{EL}$:
$I_{GRENZ,MAX} = f_1(P_{EL})$
$I_{GRENZ,MIN} = f_2(P_{EL})$

S6 — $I_{GRENZ} > I_{GRENZ,MAX}$? — N
J

S7 — $I_{GRENZ} = I_{GRENZ,MAX}$

S8 — $I_{GRENZ} < I_{GRENZ,MIN}$? — N
J

S9 — $I_{GRENZ} = I_{GRENZ,MIN}$

S10 — Messen des Betriebsstroms $I_B$

S11 — N — $I_B > I_{GRENZ}$? — J

S12 — Hochspannungseinrichtung abschalten

Fig. 7

Ende

**EP 2 408 569 B2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19903824 A1
- DD 31812 A
- US 20080203198 A1
- US 20070227445 A1
- US 4073002 A
- EP 1250962 A2
- EP 0185311 A2